(19) **Europäisches Patentamt**
**European Patent Office**
**Office européen des brevets**

(11) **EP 3 232 696 B1**

(12) **EUROPEAN PATENT SPECIFICATION**

(45) Date of publication and mention
of the grant of the patent:
**26.06.2019 Bulletin 2019/26**

(51) Int Cl.:
***H04W 4/02*** (2018.01)     ***G01S 5/02*** (2010.01)
***H04W 88/12*** (2009.01)

(21) Application number: **16164696.3**

(22) Date of filing: **11.04.2016**

(54) **WLAN CLIENT LOCATION BASED ON DIRECTIONAL BEACON**

WLAN-CLIENTSTANDORT, BASIEREND AUF RICHTUNGSABHÄNGIGER BAKE

LOCALISATION DE CLIENT WLAN SUR LA BASE D'UNE BALISE DIRECTIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2017 Bulletin 2017/42**

(73) Proprietor: **Huawei Technologies Co., Ltd.
Longgang District
Shenzhen, Guangdong 518129 (CN)**

(72) Inventors:
• **WEITZMAN, Avi**
  **80992 Munich (DE)**
• **SHILO, Shimi**
  **80992 Munich (DE)**
• **EZRI, Doron**
  **80992 Munich (DE)**
• **REZNIC, Zvi**
  **80992 Munich (DE)**
• **JIANG, Xingfeng**
  **80992 Munich (DE)**

(74) Representative: **Gill Jennings & Every LLP
The Broadgate Tower
20 Primrose Street
London EC2A 2ES (GB)**

(56) References cited:
**EP-A2- 2 552 162          US-A1- 2005 035 906
US-A1- 2011 018 766      US-A1- 2014 274 112**

EP 3 232 696 B1

**Description**

FIELD AND BACKGROUND OF THE INVENTION

The present invention, in some embodiments thereof, relates to methods and apparatus for determining location of a client station by using Wireless Local Area Network (WLAN) technologies, and, more particularly, but not exclusively, to methods and apparatus suitable for use with currently existing WLAN protocols.

US 2011/0018766 A1, US 2005/0035906 A1, US 2014/0274112 A1 and EP 2552162 A2 describe alternative approaches to determining locations.

SUMMARY OF THE INVENTION

An object of the invention is an improvement of location and tracking in wireless networks.

The object is solved by the subject matter of the independent claims. The dependent claims provide further embodiments.

An aspect of some embodiments of the invention includes a client station discovering a direction to several Access Points (APs), and the client station calculating its location based on the direction or angle to the several APs and on discovering locations of the APs, or other WLAN devices that transmit a beacon, from data broadcast by the APs. The data broadcast by the APs is optionally included in a beacon broadcast, which is typically not encrypted, and so can be available even to client stations which are not logged into a WLAN secured by the APs. In some embodiments, no hardware changes are required, neither to the APs nor to the client stations, in order to implement such location calculation in WLANs which conform to existing WLAN protocols.

The terms "Access Point" and "AP" in all their grammatical forms is used throughout the present specification and claims interchangeably with the terms "wireless router" and "wireless repeater" and "wireless range extender" and any other WLAN device which transmits beacons and their corresponding grammatical forms.

According to an aspect of some embodiments of the present invention there is provided an access point device, in particular for a wireless local area network (WLAN), including a plurality of antennas, a transmitter configured to transmit a first beacon signal in a pre-defined first direction, using at least one of the antennas, and transmit a second beacon signal in a pre-defined second direction, which is different from the first direction in azimuth and/or elevation, using at least one of the antennas; wherein each one of said first and second beacon signals comprises identifier information indicative of the direction of the respective beacon signal.

According to some embodiments of the invention, each one of the first and second beacon signals is produced by more than one antenna using beam-forming.

According to some embodiments of the invention, the first and second beacon signals are part of a plurality of beacon signals transmitted in a plurality of iterations of a beacon sweep such that within each one of the plurality of iterations the WLAN transmitter transmits the beacon signal in a plurality of different transmission directions.

According to some embodiments of the invention, the beacon sweep covers at least a section of an elliptical coverage area around the access point device.

According to some embodiments of the invention, the transmitter is adapted to encode access point location data into the beacon signal in each of the plurality of iterations.

According to some embodiments of the invention, the access point location data includes coordinates of the access point device, and an indication of the coordinates.

According to some embodiments of the invention, the identifier information includes at least one member of a group consisting of an absolute transmission direction of the beacon signal, an indication of the absolute transmission direction, a transmission angle of the beacon signal in relation to a reference point of the access point device, an indication of the transmission angle, a time within a sweep cycle during which the beacon signal was transmitted, and an indication of the time within the sweep cycle.

According to some embodiments of the invention, the transmitter supports smart antenna process for transmitting at a plurality of different directions in each of a plurality of iterations during a beacon sweep.

According to an aspect of some embodiments of the present invention there is provided a method of operating an access point, including instructing a wireless local area network (WLAN) transmitter having a plurality of antennas to transmit a first beacon signal in a pre-defined first direction, using at least one of the antennas and to transmit a second beacon signal in a pre-defined second direction, which is different from the first direction in azimuth and/or elevation, using at least one of the plurality of antennas; wherein each one of said first and second beacon signals comprises identifier information indicative of the direction of the respective beacon signal.

According to some embodiments of the invention, each one of the first and second beacon signals includes identifier information, in particular indicative of its direction.

According to some embodiments of the invention, each one of the first and second beacon signals is produced by more than one antenna using beam-forming.

According to some embodiments of the invention, the previous claims wherein the first and second beacon signals are part of a plurality of beacon signals transmitted in a plurality of iterations of a beacon sweep such that within each one of the plurality of iterations the WLAN transmitter transmits the beacon signal in a plurality of different transmission directions.

According to some embodiments of the invention, the beacon sweep covers at least a section of an elliptical coverage area around the access point device.

According to some embodiments of the invention, the transmitter is adapted to encode access point location data into the beacon signal in each of the plurality of iterations.

According to some embodiments of the invention, the access point location data includes coordinates of the access point device, and an indication of the coordinates.

According to some embodiments of the invention, the identifier information includes at least one member of a group consisting of an absolute transmission direction of the beacon signal, an indication of the absolute transmission direction, a transmission angle of the beacon signal in relation to a reference point of the access point device, an indication of the transmission angle, a time within a sweep cycle during which the beacon signal was transmitted, and an indication of the time within the sweep cycle.

According to some embodiments of the invention, the transmitter supports smart antenna process for transmitting at a plurality of different directions in each of a plurality of iterations during a beacon sweep.

According to an aspect of some embodiments of the present invention there is provided a client device, in particular for a wireless local area network (WLAN), including at least one antenna, and a processor configured to receive at least two beacon signals from at least two access point devices, and estimate location information, in particular longitude, latitude, and/or height of each of the at least two access point devices, based on the at least two beacon signals, in particular based on a content of the signal and/or a power value of the signal; wherein each beacon signal comprises identifier information indicative of the direction of the respective beacon signal.

According to some embodiments of the invention, the processor is adapted to decode a beacon identifier and the location information from each of the at least two beacon signals and estimate the location information accordingly.

According to some embodiments of the invention, the processor is adapted to decode an Equivalent Isotropically Radiated Power (EIRP) data from the at least two beacon signals and use the EIRP data for improving an estimation of the location information.

According to some embodiments of the invention, the processor is adapted to decode access point location data from the at least two beacon signals and to use the decoded access point location data for estimating the location information.

According to some embodiments of the invention, the content of the signal includes a transmission angle in relation to a reference point of the at least one access point device, wherein the processor adapted to calculate a first received signal strength indication (RSSI) of transmissions of a first one of the at least two access point devices, calculate a second RSSI of transmissions of the first one of the at least two access point devices of the beacon signal, and estimate the location information by calculating an angle to the first one of the at least two access point devices according to a difference between the first RSSI and the second RSSI.

According to some embodiments of the invention, the at least one antenna is adapted for receiving a plurality of encoded beacon signals from a plurality of access point devices, wherein the processor is adapted to calculate a received signal strength indication (RSSI) of each one of the plurality of encoded beacon signals, establish a WLAN connection with one of the plurality of access point devices according to the RSSI of each one of the plurality of encoded beacon signals.

According to an aspect of some embodiments of the present invention there is provided a method of operating a client device, including receiving at least two beacon signals from at least one access point device, and estimating a location information, in particular longitude, latitude, and/or height of the client device based on the at least two beacon signals, in particular based on a content of the signal and/or a power value of the signal; wherein each beacon signal comprises identifier information indicative of the direction of the respective beacon signal.

According to some embodiments of the invention, the estimating includes decoding a beacon identifier and location information from each of the at least two beacon signals and estimating the location information accordingly.

According to some embodiments of the invention, the decoding includes decoding Equivalent Isotropically Radiated Power (EIRP) data from the at least two beacon signals and using the EIRP data for improving an estimation of the location information.

According to some embodiments of the invention, the estimating includes decoding access point location data from the at least two beacon signals and using the decoded access point location data for estimating the location information.

According to some embodiments of the invention, the content of the beacon signals includes a transmission angle in relation to a reference point of the at least one access point device, and wherein the estimating includes calculating a first received signal strength indication (RSSI) of transmissions of the at least one access point device, calculating a second RSSI of transmissions of the at least one access point device of the beacon signal, and estimating the location information by calculating an angle to the at least one access point device according to a difference between the first RSSI and the second RSSI.

According to some embodiments of the invention, further including receiving a plurality of encoded beacon signals from a plurality of access point devices, calculating a received signal strength indication (RSSI) of each one of the plurality of encoded beacon signals, and establishing a WLAN connection with one of the plurality of access point devices according to the RSSI of each one of the plurality of encoded beacon signals.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

Figure 1A is a simplified block diagram illustration of an access point transmitting beacon signals according to an example embodiment of the invention;

Figure 1B is a simplified block diagram illustration of a client device according to an example embodiment of the invention;

Figure 1C is a simplified illustration of a client station 101 receiving broadcast signals from several APs according to an example embodiment of the invention;

Figure 2 is a simplified illustration of an AP and angles of a client station relative to the AP according to an example embodiment of the invention;

Figure 3 is a simplified illustration of a transmission beam demonstrating beam sweep according to an example embodiment of the invention;

Figures 4A and 4B are simplified illustrations of lobes of transmission beams according to an example embodiment of the invention;

Figure 5 is a simplified flow chart illustration of a method of operating an access point according to an example embodiment of the invention; and

Figure 6 is a simplified flow chart illustration of a method of operating a client device according to an example embodiment of the invention.

DESCRIPTION OF SPECIFIC EMBODIMENTS OF THE INVENTION

The present invention, in some embodiments thereof, relates to methods and apparatus for determining location of a client station by using Wireless Local Area Network (WLAN) technologies, and, more particularly, but not exclusively, to methods and apparatus suitable for use with currently existing WLAN protocols.

An aspect of some embodiments of the invention includes a client station discovering a direction to several Access Points (APs) (or any WLAN device transmitting beacon, for example Ad-Hoc devices), and the client station calculating its location based on the direction to the several APs and on discovering locations of the APs from data broadcast by the APs. The data broadcast by the APs is optionally included in a beacon broadcast, which is typically not encrypted, and so can be available even to client stations which are not logged (associated) into a secured WLAN. In some embodiments, no hardware changes are required, neither to the APs nor to the client stations, in order to implement such location calculation in WLANs which conform to existing WLAN protocols.

An aspect of some embodiments of the invention includes a client station estimating a Line of Site (LoS) angle to several APs, by using AP beacon frame information.

In some embodiments, the client station receives a beacon beam with only one angle/direction, and uses the beacon beam as a LoS beam.

In some embodiments, the client station selects a LoS beacon beam from among several beacon beams received. In some embodiments, in order to enable angle estimation by various client types, even for a single antenna client, a multi-antenna AP transmits beacons at different angles using beam-forming (BF) technology.

An aspect of some embodiments of the invention includes an AP broadcasting a beam in a specific direction, and broadcasting a location of the AP and a direction of the beam. The AP optionally broadcasts such beams in various directions.

In some embodiments, a client station receiving such beams from one AP can calculate its location based on direction to a known point, plus distance, optionally estimated by various distance estimation methods.

In some embodiments, a client station receives such beams from several APs, and can calculate its location based on triangulation.

In some embodiments, the APs periodically sweep their beam and broadcast a frame to a full 360°, optionally within a short period of time.

An aspect of some embodiments of the invention includes the AP broadcasting the beam, the location of the AP, and the direction of the beam during an unencrypted section of communications, such as, for example, during a management frame (using terminology of IEEE 801.11 based WLANs) such as a beacon frame.

An aspect of some embodiments of the invention includes a calculation performed by a client station without a requirement to log on to a WLAN network, without necessarily requiring calculations on the part of an AP or a network server, and without requiring addition of specialized devices to an AP.

In some embodiments, the WLAN APs are APs having multiple antennas, which support beam-forming, such as by way of a non-limiting example support beam-forming according to IEEE protocol 802.11n and 802.11ac, and/or smart antenna capabilities for implementing Angle of Departure (AoD).

In some embodiments, the AP optionally adds additional information to an unencrypted beacon frame to improve the localization such as: AP location (X,Y,Z); AP transmission (TX) power, such as Equivalent Isotropically Radiated Power (EIRP); beacon direction or beam angle; and time.

In some embodiments, the client station may optionally use a beacon outgoing beam angle and optionally additional data to estimate distance to a beacon (such as, by way of some non-limiting examples, Receive Signal Strength Indicator (RSSI), Time Difference Of Arrival (TDOA), etc.) to calculate its estimated location.

An aspect of some embodiments of the invention includes adding self-location methods to existing location and tracking systems, potentially improving accuracy of such systems.

Determining location

Knowing a location of one or more start point(s), for example knowing a location of AP(s), several methods may be used to determine a client location. The start point locations may be received by the client station from data broadcast by the APs.

One method of determining a client location is by triangulation. The client station may receive wireless transmission beams from several APs, the beams including locations of the APs and directions of the beams. The client station can calculate a reverse, or back, azimuth for each beam, and calculate its own location by triangulation.

One method of determining a client location is by direction and distance from a known location. A location of an AP and a direction of a beam broadcast by the AP are received by a client station. The client station calculates an Angle of Arrival (AoA) of the beam, optionally based on received direction of beam broadcast, and estimates distance to the AP. Some example methods of determining distance are described below.

Location of an AP or a client station is typically noted as coordinates in some agreed upon coordinate system, or as coordinate indicators representing some convention used by an AP.

By way of some non-limiting examples, coordinates may include latitude/longitude/elevation using any known geographic coordinate system such as latitude/longitude in degrees and elevation in meters, or the Universal Transverse Mercator (UTM) latitude/longitude and elevation.

By way of some non-limiting examples, coordinate indicators may include, by way of some non-limiting examples, street names, house numbers, floor number, and so on, which can be translated into coordinates.

Determining direction

An AP may broadcast a beam in a specific direction, and broadcast the direction. The beam has a certain width, and client stations within the width will receive the direction, but the client stations may not necessarily be exactly at the direction of the beam, and may be somewhat off a center of the beam.

One factor which influences accuracy of a location determined by a client station is a width of the broadcast beam. The angular width of the beam may determine angular resolution of direction.

In some embodiments, the APs periodically sweep their beam 360°, whether sweeping in incremental small angle steps and covering 360° in one round, or incremental large angles and covering 360° over several rounds of 360°.

In some embodiments, the APs periodically sweep their beam less than 360°, broadcasting to a specified coverage area.

Determining distance

Some example methods of determining distance from an AP include estimating location based on AoA to two or more APs, and calculating distance to the AP from the estimated location of the client station.

Accuracy

In many typical cases of determining a client station's location based on data from broadcasting APs, there is actually more data than is required for simple location determination.

By way of a non-limiting example, triangulation may be performed based on broadcasts from two APs. When more APs are received at a client station, the additional data can be used to increase accuracy.

By way of another non-limiting example, when calculating by distance and direction, the distance determination can be improved in accuracy when receiving repeated beams. If a station is stationary, the repeated reception can be used to increase accuracy of measurement of RSS and/or TDOA and/or PER.

The client stations may be receiving side lobes of a broadcast beam, in such a case the direction is inaccurate. In some embodiments, the client station may distinguish between a main lobe and a side lobe of a broadcast beam, for example by receiving an additional broadcast of the beam, with a different direction, and greater received power. The beam with the greater power may be selected as a main beam, and its direction used to determine the location of the client station.

The client stations may be receiving none-line-of-sight reflections of the broadcast beam; in such a case the direction is inaccurate. The client stations may be receiving both -line-of-sight and none-line-of-sight versions of the broadcast beam. In some embodiments, the client station may distinguish between line-of-sight and none-line-of-sight versions of the broadcast beam, and use the line-of-sight versions of the broadcast beam to determine its location.

Application of the methods to client stations not enrolled in an AP's network

APs can broadcast data for use in determining client station in an unencrypted manner. Many wireless protocols support unencrypted broadcast for at least part of the time, such as, by way of a non-limiting example, once every period of time, e.g. during a beacon broadcast in IEEE protocol 802.11.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

Beacon Frame

Beacons are used in many WLAN technologies. Beacons are sent by a cell coordinator (an AP in 802.11, Basic Service Set (BSS) and FFD PAN in ZigBee, etc.) as a broadcast message.

A beacon frame is a management frame and transmitted periodically to announce presence of a wireless LAN. The beacon frame transmission identifies a network, coordinator capabilities, scheduling, Quality of Service (QoS), network modification, timing, etc. Beacon frames are used by cell devices for:

passively scanning;
learning about particular network capabilities and availability;
selecting a most appropriate network in network entry and handovers;
timing (power saving, handover, etc.); and
changing a channel.

Beam-Forming

Beam forming provides a mechanism to steer a broadcast beam without mechanically rotating antennas. Beam forming uses multiple antennas. Beam forming enables changing a beam pattern electronically by transmitting a signal with different phases $\alpha$ from each antenna.

A specific direction beam $\theta$ may be achieved according to the following equation:

$$\theta = sin\text{-}1(\alpha/(2\pi d) \qquad \text{Equation 1}$$

where d is a distance between antennas, in units of a broadcast wavelength $\lambda$.

In WLAN, beam-forming techniques can be classified into explicit and implicit beam-forming:
In explicit beam-forming, a beam-former receives feedback regarding a communication channel from a beam-formee (recipient of the broadcast). Optionally the communication channel is sounded via Null Data Packet (NDP). The beam-former uses the feedback to produce the beam-formed transmission beam.

In implicit beam-forming, the beam-former does not rely on feedback from the beam-formee, and instead uses estimates of the opposite-direction channel, assuming channel reciprocity.

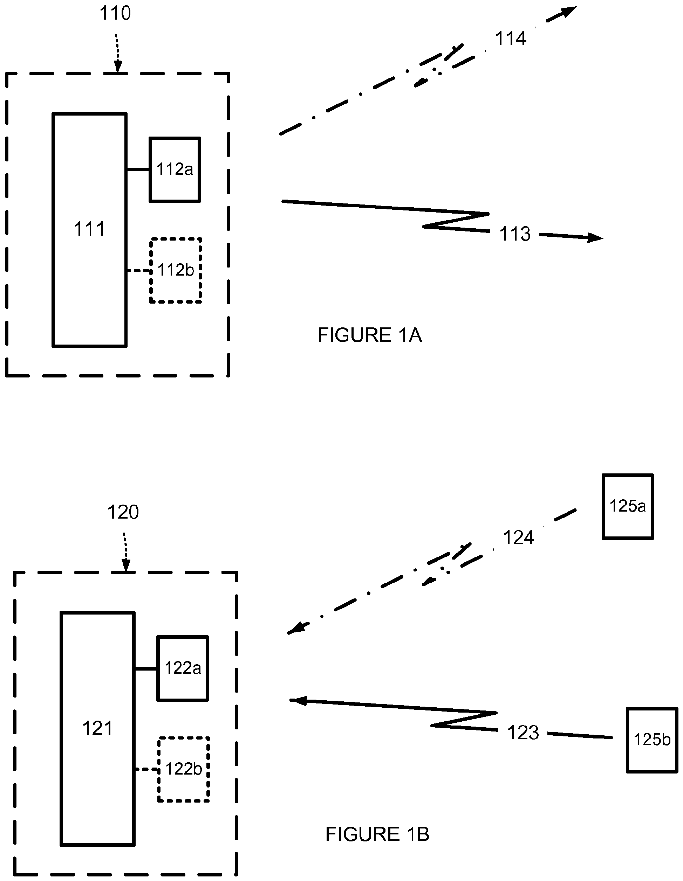

Reference is now made to Figure 1A, which is a simplified block diagram illustration of an access point 110 transmitting beacon signals 113 114 according to an example embodiment of the invention.

Figure 1A depicts an access point 110, having a transmitter 111 and one or more antennas 112a 112b. The transmitter 111 is configured to transmit, via at least one of the antennas 112a 112b, a first beacon signal in a pre-defined first direction 113, and a second beacon signal in a pre-defined second direction 114.

The two directions 113 114 are different in azimuth and/or elevation.

Reference is now made to Figure 1B, which is a simplified block diagram illustration of a client device 120 according to an example embodiment of the invention.

The client device 120 depicted in Figure 1B includes an antenna 122a, and a processor 121, configured to receive at least two beacon signals 123 124 from at least two access point devices (125a 125b). The processor 121 estimates location information, in particular longitude, latitude, and/or height of the two access point devices (125a 125b), based on the beacon signals 123 124, in particular based on a content of the signal and/or a power value of the signals.

In some embodiments, the client device 120 includes more than one antenna 122a 122b.

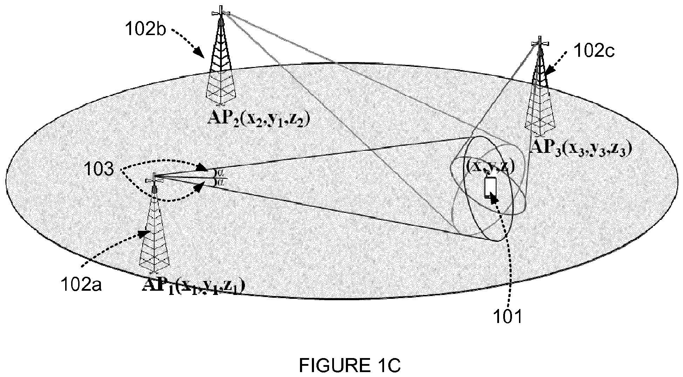

Reference is now made to Figure 1C, which is a simplified illustration of a client station 101 receiving broadcast signals from several APs according to an example embodiment of the invention.

Figure 1C shows that broadcast signals from each of the APs arrives at the client station 101 from a different direction. The description below will describe how location mat be calculated in the setting illustrated in Figure 1C.

Figure 1C depicts the client station 101, and three APs 102a 102b 102c. Each one of the APS knows its own location, for example as coordinates (x, y, z) in some coordinate system.

In some embodiments, the APs each have multiple antennas and a capability to broadcast a beam in a specific direction using beam-forming technology. Each AP has an associated beam width of its beam broadcasts, depicted for example as two half-width angles $\alpha$ 103.

The AP 102a 102b 102c transmits a beacon in a specific direction as follows:

the AP transmits a directional beacon at each time period, also termed herein a beacon interval;
after a set of one or more beacon intervals, termed herein a cycle time, the AP changes its transmit angle in azimuth and/or elevation, termed herein a cycle angle;
during a period of time termed herein a sweep time the AP may cover a portion or even all of its cell area, and optionally returns to an initial beacon direction; and
the AP transmits information to a client station in the cell, optionally within the beacon frame.

The client station estimates its location by estimating directions to the APs and optionally uses a triangulation method to determine its location, as follows:

the client station optionally estimates a direction by, for each beacon and for each AP:

recording information received in the beacon, optionally in the beacon frame, and optionally beacon RSSI, beacon S/N; and

determining a direction to each AP according to a best beacon signal from that AP. Best beacon signal is optionally determined by strongest signal and/or highest Signal to Noise ratio. The direction is optionally read from the information in the beacon signal; and

uses the direction to each AP for triangulation to estimate location.

In some embodiments, if a number of the APs is greater than 4, filter out APs that have a big direction error relative to other APs (as will be described in further detail below).

In some embodiments, additional parameters such as RSSI, TDOA, and so on are optionally used to estimate location.

In some embodiments, the client station optionally sends information, received from the APs and/or measured/calculated at the client station, such as RSSI and/or PER, to an external server to calculate the location of the client station. The server optionally calculates the location of the client server and optionally transmits the location to the client server.

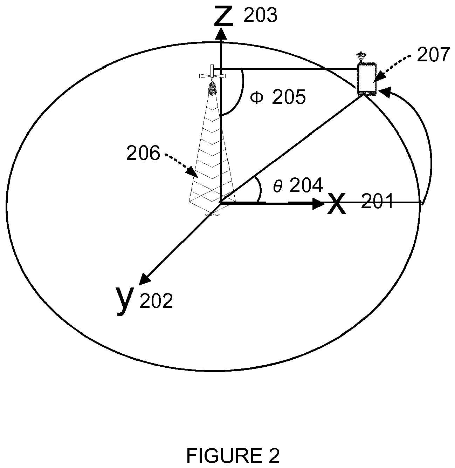

Reference is now made to Figure 2, which is a simplified illustration of an AP and angles of a client station relative to the AP according to an example embodiment of the invention.

Figure 2 depicts a coordinates system including axes X 201 Y 202 and Z 203 with its origin at a location of an AO 206.

Figure 2 is used to define an azimuth angle $\theta$, relative to the X axis 201 direction, to a client station 207, and an elevation angle $\Phi$ to the client station 207, measured as above or below the horizon.

Additional AP-side features and tasks are now described.

As described above, the AP transmits each beacon frame at different directions, optionally by using BF technology. In some embodiments the AP may have directional antennas, in which case beam forming may optionally not be used.

In some embodiments the AP may use the following parameters:

Beacon sweep interval, optionally calculated by:

$$\mathrm{BcnSwpInt} = \frac{\mathrm{CycleTime} \cdot \mathrm{Ang}_v \cdot \mathrm{Ang}_r}{\mathrm{Cover}_h \cdot \mathrm{Cover}_v \cdot (1 + \mathrm{PER})} \qquad \text{Equation 2}$$

Where CycleTime stands for a configured beacon cycle time [sec]. CycleTime is optionally greater or equal to a Beacon sweep interval; $\mathrm{Ang}_v$ stands for a configured vertical angle step [degrees], for example the angle i.e., $\phi$ of Figure 2; $\mathrm{Ang}_r$ stands for a configured azimuth angle step [degrees] i.e. $\theta$ of Figure 2; $\mathrm{Cover}_v$ stands for a configured AP vertical beam width [degrees]; $\mathrm{Cover}_h$ stands for a configured AP horizontal beam width [degrees]; PER stand for a beacon packet error rate [%].

A number of cycles in a beacon sweep interval $N_c$ is optionally calculated as follows:

$$N_c = \left\lceil \frac{\mathrm{Ang}_v \cdot \mathrm{Ang}_r}{\mathrm{Cover}_h \cdot \mathrm{Cover}_v \cdot (1 + \mathrm{PER})} \right\rceil \qquad \text{Equation 3}$$

A number of beacon frames per cycle time $N_b$ is optionally calculated as follows:

$$N_b = \left\lfloor \frac{CycleTime}{BeaconInterval} \right\rfloor \qquad \text{Equation 4}$$

In some embodiments, the AP transmits each beacon at a different angle with a minimal antenna beam width (a sum of the two angles $\alpha$ 103 of Figure 1C). The AP beacon angle is optionally shifted every beacon interval by the radial angle of $\mathrm{Ang}_r = \Delta\theta$ [degrees] and optionally by a vertical angle $\mathrm{Ang}_v = \Delta\phi$ [degrees]. It is noted that the minimal antenna beam width depends on a number of antennas per AP, a direction of the antennas, and so on.

In some embodiments, the AP includes within beacon frames one or more of the following:

AP location (X, Y, Z);
AP floor, optionally a floor of a building in which the AP is located;
Beacon angle and reference point ($\phi$, $\theta$);
AP antenna span, or beam width, optionally defined in units of angle, of a main lobe of a transmission beam;
AP beacon angle step ($\Delta\phi$, $\Delta\theta$);
AP transmitted (Tx) Equivalent Isotropically Radiated Power (EIRP);
Absolute time; and
Network available channels;

In some embodiments, the AP optionally performs one or more of the following calibration procedures, which potentially improve accuracy of beam forming, in beam direction and/or beam width:

calibrate antenna gain imbalances;
calibrate antenna phase imbalances;
calibrate antenna coupling losses; and
calibrate antenna positions (alignment).

In some embodiments, the calibration process is optionally performed before AP service, and/or at each rebooting of AP service, and/or periodically during AP operation. The calibration process may be done automatically or manually.

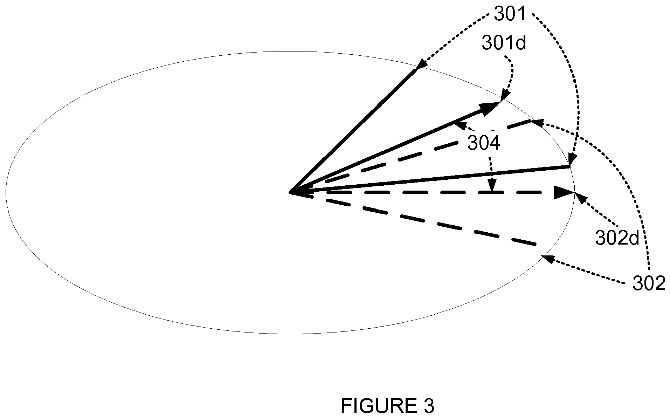

Reference is now made to Figure 3, which is a simplified illustration of a transmission beam demonstrating beam sweep according to an example embodiment of the invention.

Figure 3 depicts an ellipse, used to represent an isometric view of a circle, and two transmission beams transmitted from a center of the circle.

Width of the first beam ($2\alpha$ 103 of Figure 1C) is depicted by lines 301, and a central direction of the first beam is depicted by an arrow 301d.

Width of the second beam is depicted by lines 302, and a central direction of the second beam is depicted by an arrow 302d.

Figure 2 illustrates that the second beam is rotated by a sweep step angle 304 relative to the first beam.

In some embodiments, AP sweep step angles, both in azimuth ($\Delta\theta$ 304, depicted in Figure 3) and in elevation ($\Delta\phi$, not depicted in Figure 3) are smaller than the beam width ($2\alpha$ 103 of Figure 1C) across their respective axes. The client station typically receives a beacon transmission at more than one beacon transmission.

In some embodiments, the client station selects a best beacon by:

comparing AP broadcasts to directional beacon power;
measuring AP RSSI on all AP broadcast frames, optionally except beacons;
measuring AP beacon RSSI per direction;
calculating difference in beacon power per direction; and
selecting a beacon transmission with highest power, and using the direction transmitted in the selected beacon transmission.

In some embodiments, the following method is optionally used to detect a non-line-of-sight (NLOS) AP - by averaging a range to AP with a weight function based on distance measurements. The method optionally rejects NLOS measurements which provide large errors.

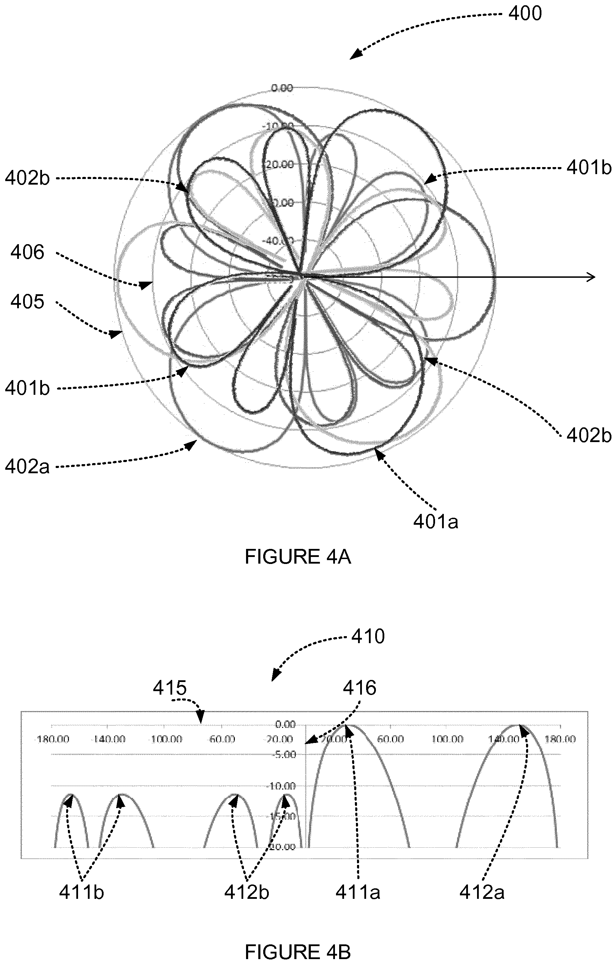

Reference is now made to Figures 4A and 4B, which are simplified illustrations of lobes of transmission beams according to an example embodiment of the invention.

Figure 4A depicts a circular graph 400 showing lobes 401a 401b of a first directional beam, and lobes 402a 402b of a second directional beam, rotated relative to the first directional beam.

Figure 4A depicts the lobes extending to different directions, up to a full 360° circle. Figure 4A depicts the lobes extending to different extents. The first directional beam has a full power lobe 401a extending up to an outer circle 405 representing transmitted power depicted as 0dB, and lower power lobe(s) 401b extending up to an second, inner circle 406 representing a power depicted as -10dB.

Figure 4B depicts a linear graph 410, showing power radiated at different angles/directions, from -180° to +180.

Figure 4 has an X-axis 415 in units of angle [degrees], and a Y-axis in units of power [dB].

Figure 4B shows a main, full power lobe 411a of a first directional beam, and a main full power lobe 412a of a second directional beam rotated relative to the first directional beam. Figure 4B also depicts lower power side lobes 411b belonging to the first directional beam and lower power side lobes 412b belonging to the second directional beam.

Additional client-station-side features and tasks are now described.

As described above, the client station (STA) calculates its location by using triangulation based on an angle and location of Nap >= 2 APs (Nap stands for the number of APs). The STA determines the angles $\theta$ and/or $\phi$ (see Figure 2) to the AP, and optionally estimates the accuracy of the angles, according to one or more of:

RSSI - to find a "best" beacon, optionally as described above;
AP antenna beam width transmitted in the beacon, to estimate an angle calculation error; and
AP beacon angle transmitted in the beacon.

In some embodiments, the STA estimates the angles by finding a "best" beacon and using the angle information advertised within the "best" beacon frame. Since the AP changes beacon transmit angles ($\theta$, $\phi$) in each cycle time in small steps ($\Delta\phi$, $\Delta\theta$) (the steps preferably smaller than the antenna beam width - $\alpha$), the estimated angle ($\theta$, $\phi$) accuracy depends on $\Delta\theta$, $\Delta\phi$ and $\alpha$.

An example method of determining location is now described with reference to databases. It is emphasized that the database method is not the only location determination embodiment of the invention. Some embodiments include using tables, look-up tables, and/or on-line retention of data. In some embodiments on-line filtering for best-beacon information may optionally be used, and/or LoS beacon information.

In some embodiments, the client station optionally uses one or two or more databases and/or tables, by way of a non-limiting example as described below.

A first database of two dimensional sweep cycle data, which stores cycle summary information per AP. Optionally, the first database includes data on all available channels broadcast in a beacon. Table 1 below depicts example data in the first database:

Table 1

| AP index | AP BSSID | Cycle Information |
|---|---|---|
| 1 | BSSID(1) | |
| 2 | BSSID(2) | |
| 3 | BSSID(3) | |
| : | : | |
| K | BSSID(k) | |

The database of Table 1 includes one or more of the following information in the cycle information entry:

Number of frames: N;
Number of Beacons ($N_b$);
Accumulated beacon RSS: $P_b$;
Accumulated weight RSS, defined as:

$$R(k,j,b) = \sum_i t_i(k,j,b) \cdot RSS_i(k,j,b)$$

Equation 5

where $k$ is an AP index (from 1 to $N_{ap}$); b is a beacon frame index in a beacon cycle (from 1 to $N_b$); $j$ is a cycle number within a sweep of AP number $k$ (from 1 to $N_c$); RSS(k,j) is a received frame's RSS of AP number $k$ in cycle $j$; $t_i$(k,j) is a frame receive time (optionally elapsed time from last beacon interval) of AP number k in cycle j (optionally in microsecond units);
Accumulated arrival time, defined as:

$$T(k,j,b) = \sum_i t_i(k,j,b)$$

Equation 6

beacon angle $\theta$, optionally 180°- azimuth direction broadcast in beam; and
beacon angle $\phi$, optionally -1*elevation direction broadcast in beam.

A second database of two dimensional sweep cycle data per AP received by the client station, which stores cycle summary information per AP. Optionally, the second database includes data on all available channels broadcast in a beacon. Table 2 below depicts example data in the second database:

Table 2

| AP index | Selected Angle | Cycles count | AP BSSID | Cycle 1 | Cycle 2 | ... | Cycle(k,j) |
|---|---|---|---|---|---|---|---|
| 1 | | | BSSID(1) | | | | |
| 2 | | | BSSID(2) | | | | |
| 3 | | | BSSID(3) | | | | |
| : | | | : | | | | |
| K | | | BSSID(k) | | | | |

The database of Table 2 includes one or more of the following information for each cycle information entry:

beacon frame accumulated and/or average RSS ($P_b$);
per beacon: average relative receive signal power ($P_{rx}$);
number of beacon received in the cycle (Nb);
number of broadcast and/or unicast frames received in the cycle (N);
received beacon angle $\theta$; and
received beacon angle $\phi$.

In some embodiments, the client stations performs the following method:

when a cycle time starts, the client optionally clears the cycle 1 to cycle N fields in the database of Table 2;
when a broadcast frame or unicast to the client station is received, the client optionally increments the number of frames and updates R(k,j,b), T(k,j,b) in the database of Table 1; and
when an AP beacon is received, the client optionally increments the number of the beacon Nb in the in the database of Table 1 and optionally calculates relative beacon power for AP number $k$ in interval $j$ as follows:

$$\overline{P}_{rx}(k,j,b) = \frac{R(k,j,b)}{T(k,j,b)}$$

Equation 7

At an end of a cycle time the client station optionally:

updates the following parameters from the database of Table 1:

number of beacon received in the cycle (Nb);
number of broadcast and/or unicast frames received in the cycle (N); and
cycle angles transmitted by the beacon ($\theta$, $\phi$); and

updates cycle count (Nc), optionally by counting entries in the Cycle $i$ fields of the database of Table 2;
calculates, by using data from fields of the database of Table 2:

an average relative receive signal power (if number of beacon > 0) for AP number k in interval j as follows:

$$P_{rx}(k,j) = \frac{1}{N_b}\sum_{b=1}^{N_b}\overline{P}_{rx}(k,j,b)$$

Equation 8

A beacon average RSS, as follows:

$$P_b(k, j) = \frac{1}{N_b} \sum_i^{N_b} P_b(i)$$

Equation 9

At an end of a sweep time (after Nb cycles), the client station optionally finds a cycle with a strongest Prx and optionally updates the selected cycle's received angles.

In some embodiments, the client station uses triangulation mathematics, given AP number $k$ angles $\theta_k$, $\phi_k$ as follows:

$$z = Z_k + R_k \bullet \cos(\theta_k);$$

$$x = X_k + R_k \bullet \sin(\theta_k) \bullet \cos(\phi_k);$$

$$y = Y_k + R_k \bullet \sin(\theta_k) \bullet \sin(\phi_k).$$

Equations 10

where

x, y, z are coordinates of the client location;

$X_k$, $Y_k$, $Z_k$: are location coordinates of the AP number k, as transmitted in a beacon; and

$\theta_k$, $\phi_k$ are directions to AP number k as calculated above.

In some embodiments, the client station optionally divides APs into pairs, optionally all the possible pairs ($N_p$

$$N_p = \binom{n}{p} = \frac{n!}{p! \cdot (n-p)!}$$

is a number of pairs, up to ).

For each of the above AP pairs the client station optionally calculates a distance (Ri, Rj) to each of the APs (APi and APj) by:

Assigning $\theta i$, $\phi i$ to Equations 10 above, and comparing $[X_i, Y_i, Z_i]$ to $[X_j, Y_j, Z_j]$ when assigning $\theta_j$, $\phi_j$ to Equations 10. The assigning produces the following 3 equations with 2 variables $R_i$, $R_j$):

$$1)\ Z_i + R_i \cdot \cos(\theta_i) = Z_j + R_j \cdot \cos(\theta_j)$$

$$2)\ X_i + R_i \cdot \sin(\theta_i) \cdot \cos(\varphi_i) = X_j + R_j \cdot \sin(\theta_j) \cdot \cos(\varphi_j)$$

$$3)\ Y_i + R_i \cdot \sin(\theta_i) \cdot \sin(\varphi_i) = Y_j + R_j \cdot \sin(\theta_j) \cdot \sin(\varphi_j)$$

Equations 11

Optionally, by using 2 of the above equations, the client station calculates Rij, $R_{ji}$:

$$\begin{pmatrix} R_{ij} \\ R_{ji} \end{pmatrix} = \begin{pmatrix} -\sin(\theta_i) \cdot \cos(\phi_i) & \sin(\theta_j) \cdot \cos(\phi_j) \\ -\sin(\theta_i) \cdot \sin(\phi_i) & \sin(\theta_j) \cdot \sin(\phi_j) \end{pmatrix}^{-1} \cdot \begin{pmatrix} X_i - X_j \\ Y_i - Y_j \end{pmatrix}$$

Equations 12

Optionally, using the calculated Ri and Rj the client station estimates error radius as follows:

$$Err_{ij} = \frac{abs\big((Z_i + R_{ij} \cdot \cos(\theta_i)) - (Z_j + R_{ji} \cdot \cos(\theta_j))\big)}{Z_i}$$

$$Err_{ji} = \frac{abs\big((Z_i + R_{ij} \cdot \cos(\theta_i)) - (Z_j + R_{ji} \cdot \cos(\theta_j))\big)}{Z_j}$$

Equations 13

Optionally, the client station estimates a distance $R_i$ (distance between the client station and an $AP_i$), for example by calculating a weighted average of all $R_{ij}$ values, when using above error as a weighting factor i.e.:

$$\mathrm{Err}_i' = \sum_{k=1}^{n} \mathrm{Err}_{ik}$$

$$\mathrm{R}_i = \mathrm{Err}_i' \sum_{k=1}^{n} \left( \frac{R_{ik}}{\mathrm{Err}_{ik}} \right)$$

Equations 14

It is noted that in other embodiments other methods of weighting or filtering less accurate $R_i$ estimation may be used.

Optionally, the client station calculates estimated client locations $(X_t, Y_t, Z_t)$ relative to some or all AP locations APt (t=1 to Nap).

Optionally, the client station estimates the client location (X,Y,Z) by weight averaging all the client locations $(X_t, Y_t, Z_t)$ when using $\theta t$, $\phi t$ and Rt errors as a weighting factor.

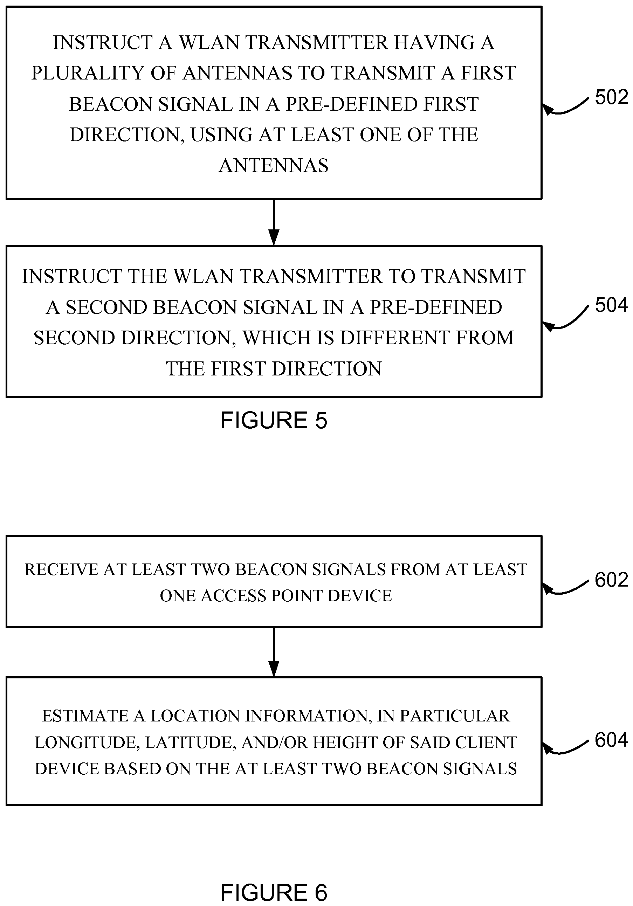

Reference is now made to Figure 5, which is a simplified flow chart illustration of a method of operating an access point according to an example embodiment of the invention.

The method of Figure 5 includes:

instructing a wireless local area network (WLAN) transmitter having a plurality of antennas to transmit a first beacon signal in a pre-defined first direction, using at least one of the antennas (502); and
instructing the WLAN transmitter to transmit a second beacon signal in a pre-defined second direction, which is different from the first direction in azimuth and/or elevation, using at least one of the plurality of antennas (504).

Reference is now made to Figure 6, which is a simplified flow chart illustration of a method of operating a client device according to an example embodiment of the invention.

The method of Figure 6 includes:

receiving at least two beacon signals from at least one access point device (602); and
estimating a location information, in particular longitude, latitude, and/or height of said client device based on the at least two beacon signals (604), in particular based on a content of the signal and/or a power value of the signal.

Potential benefits of using embodiments of the invention

Location determination by a client station according to example embodiments of the invention may be performed by a client station without:

needing to log on (associate) to a WLAN network managed by an AP. The information in a beacon transmitted by the AP can be in the clear, enabling receiving client stations to calculate their location without being part of the managed network and without logging on to the network;
using network server support. In some prior art application servers on a network track location of client stations. In example embodiments of the invention network servers are not used, not required, and thus no changes to network servers are required; and
requiring an addition of network devices to make the location determination possible. A large number of APs currently posses an ability to implement example embodiments of the invention.

In some embodiments, the client station can optionally use embodiments of the invention to determine its location in addition to existing location and tracking methods and devices. A location as determined by existing location and tracking methods and devices may serve to verify a location as determined by an embodiment of the invention - for example, if the two locations do not agree, one of the locations may be determined wrong, or even both locations may be deemed suspect and/or in need of further iterations to increase accuracy.

In some embodiments, embodiments of the invention do not require specialized client devices, requiring at most loading of a location determination software application.

In some embodiments, embodiments of the invention do not require specialized AP devices, requiring at most loading of a firmware update, as is known in the art.

AP-side benefit - every 802.1 In and 802.11ac AP can implement the invention without any hardware changes, using digital beam forming and/or smart antenna capabilities.

Client-side benefit - embodiments of the invention are compatible with legacy client stations and also with 802.11n and 802.11ac client stations with a single antenna. The client station can estimate its location without being associated to a network.

Embodiments of the invention can be used to improve accuracy of traditional location algorithms such as RSS, TDOA, RF fingerprinting, etc.

Embodiments of the invention can be used without adding any new hardware to APs or clients, and so are low cost and simple to implement.

Embodiments of the invention can be used to improve any WLAN location and tracking system without requiring hardware changes.

It is expected that during the life of a patent maturing from this application many relevant WLAN types and protocols will be developed and the scope of the term WLAN is intended to include all such new technologies *a priori.*

It is expected that during the life of a patent maturing from this application many relevant Access Points (APs), wireless routers, wireless repeaters and wireless range extenders will be developed and the scope of the above terms is intended to include all such new technologies *a priori.*

As used herein the term "about" refers to $\pm$ 20 %.

The terms "comprising", "including", "having" and their conjugates mean "including but not limited to".

The term "consisting of' is intended to mean "including and limited to".

The term "consisting essentially of' means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a unit" or "at least one unit" may include a plurality of units, including combinations thereof.

The words "example" and "exemplary" are used herein to mean "serving as an example, instance or illustration". Any embodiment described as an "example or "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

EXAMPLES

Reference is now made to the following examples, which together with the above descriptions illustrate some embodiments of the invention in a non limiting fashion.

Client station location according to example embodiments of the invention has shown performance improvements when compared to existing client station location techniques.

In indoor client station location, using APs with 4 antennas and using location determination according to example embodiments of the invention, an improvement of location and tracking accuracy of up to 30% has been demonstrated over RSS and TDoA methods. The improvement was calculated by comparing errors in location determination according to example embodiments of the invention to errors in location determination according to RSS and TDoA methods.

In indoor client station location, using APs with a 4-port smart antenna (90°) - an improvement of accuracy up to 60% has been demonstrated over RSS and TDoA methods.

In outdoor client station location using APs with 4 antennas and using location determination according to example embodiments of the invention, an improvement of location and tracking accuracy of up to 40% has been demonstrated over RSS and TDoA methods.

In outdoor client station location, using APs with a 4-port smart antenna (90°) - an improvement of accuracy up to 80% has been demonstrated over RSS and TDoA methods.

The following location determination performance has been measured, under conditions of 10 APs, at various distances from the client station, including 10 meters to 50 meters, with up to 40% of the APs being non LOS.

Less than 1m error when AP angle step is 4° with 8 APs; and

Less than 2m error when AP angle step is 10° with 8 APs.

**Claims**

1. An access point device (110), in particular for a wireless local area network (WLAN), comprising:

   a plurality of antennas (112a,b);
   a transmitter (111) configured to:

   transmit a first beacon signal in a pre-defined first direction (113), using at least one of the antennas (112a, b); and
   transmit a second beacon signal in a pre-defined second direction (114), which is different from the first direction (113) in azimuth and/or elevation, using at least one of the antennas (112a,b);
   **characterized in that** each one of said first and second beacon signals comprises identifier information indicative of the direction of the respective beacon signal.

2. The access point device (110) of claim 1, wherein each one of said first and second beacon signals is produced by more than one antenna (112a,b) using beam-forming.

3. The access point device of any of the previous claims wherein said first and second beacon signals are part of a plurality of beacon signals transmitted in a plurality of iterations of a beacon sweep such that within each one of the plurality of iterations the WLAN transmitter (111) transmits the beacon signal in a plurality of different transmission directions (113 114).

4. The access point device (110) of claim 3, the beacon sweep covers at least a section of an elliptical coverage area around the access point device (110).

5. The access point device (110) of claim 3 or 4, wherein the transmitter (111) is adapted to encode access point (102a,b,c) location data into the beacon signal in each of the plurality of iterations.

6. The access point device (110) of claim 5, wherein the access point (102a,b,c) location data comprises:
   coordinates of the access point device (102a.b.c).

7. The access point device (110) of claim 1, wherein the identifier information comprises at least one member of a group consisting of:

   an absolute transmission direction of the beacon signal;
   a transmission angle of the beacon signal in relation to a reference point of the access point device; and
   a time within a sweep cycle during which the beacon signal was transmitted.

8. The access point device (110) of claim 1, wherein the transmitter (111) supports smart antenna process for transmitting at a plurality of different directions (113 114) in each of a plurality of iterations during a beacon sweep.

9. A method of operating an access point, comprising:

   instructing a wireless local area network (WLAN) transmitter (111) having a plurality of antennas (112a,b) to transmit a first beacon signal in a pre-defined first direction (113), using at least one of the antennas (112a,b) and to transmit a second beacon signal in a pre-defined second direction (114), which is different from the first direction (113) in azimuth and/or elevation, using at least one of the plurality of antennas (112a,b);
**characterized in that** each one of said first and second beacon signals comprises identifier information indicative of the direction of the respective beacon signal.

10. A client device (120), in particular for a wireless local area network (WLAN), comprising:

at least one antenna (122a,b); and
a processor (121) configured to:

receive at least two beacon signals (123 124) from at least two access point devices (125a,b); and
estimate location information, in particular longitude, latitude, and/or height of each of said client device (120), based on the at least two beacon signals (123 124), in particular based on a content of the signals and/or a power value of the signals;
**characterized in that** each beacon signal comprises identifier information indicative of the direction of the respective beacon signal.

11. The client device (120) of claim 10, wherein said processor (121) is adapted to decode a beacon identifier and said location information from each of said at least two beacon signals (123 124) and estimate said location information of said client device accordingly.

12. The client device (120) of claim 10, wherein the processor (121) is adapted to decode an Equivalent Isotropically Radiated Power (EIRP) data from the at least two beacon signals (123 124) and use the EIRP data for improving an estimation of the location information.

13. The client device (120) of any of claims 10-12, wherein the processor (121) is adapted to decode access point (125a, b) location data from the at least two beacon signals (123 124) and to use the decoded access point (125a,b) location data for estimating the location information.

14. The client device (120) of any of claims 10-13, wherein the content of the signal comprises a transmission angle in relation to a reference point of a first one of the at least two access point devices (125a,b); wherein the processor adapted to:

calculate a first received signal strength indication (RSSI) of transmissions of the first one of the at least two access point devices (125a,b);
calculate a second RSSI of transmissions of the first one of the at least two access point devices (125a,b) of the beacon signal; and
estimate the location information by calculating an angle to the first one of the at least two access point devices (125a,b) according to a difference between the first RSSI and the second RSSI.

15. The client device (120) of any of claims 10-14, wherein the at least one antenna (122a,b) is adapted for receiving a plurality of encoded beacon signals from a plurality of access point devices (125a,b); wherein the processor is adapted to:

calculate a received signal strength indication (RSSI) of each one of the plurality of encoded beacon signals;
establish a WLAN connection with one of the plurality of access point devices (125a,b) according to the RSSI of each one of the plurality of encoded beacon signals.

16. A method of operating a client device (120), comprising:

receiving at least two beacon signals (123 124) from at least one access point device (125a,b); and
estimating a location information, in particular longitude, latitude, and/or height of said client device (120) based on the at least two beacon signals (123 124), in particular based on a content of the signals and/or a power value of the signals;
**characterized in that** each beacon signal comprises identifier information indicative of the direction of the respective beacon signal.

**Patentansprüche**

1. Zugangspunktgerät (110), vornehmlich für ein drahtloses lokales Netzwerk ("Wireless Local Area Network" (WLAN)), Folgendes umfassend:

   eine Mehrzahl von Antennen (112a,b);
   einen Sender (111), für Folgendes eingerichtet:

   Übertragen eines ersten "Beacon"-Signals in eine vorher festgelegte erste Richtung (113), unter Verwendung mindestens einer der Antennen (112a,b); und
   Übertragen eines zweiten "Beacon"-Signals in eine vorher festgelegte zweite Richtung (114), die sich von der ersten Richtung (113) hinsichtlich Azimut und/oder Elevation unterscheidet, unter Verwendung mindestens einer der Antennen (112a,b);
   **dadurch gekennzeichnet, dass** sowohl das erste als auch das zweite "Beacon"-Signal Kennungsinformationen umfassen, die die Richtung des jeweiligen "Beacon"-Signals angeben.

2. Zugangspunktgerät (110) nach Anspruch 1, wobei sowohl das erste als auch das zweite "Beacon"-Signal durch mehr als eine Antenne (112a,b) unter Verwendung von Strahlformung erzeugt wird.

3. Zugangspunktgerät (110) nach einem der vorstehenden Ansprüche, wobei das erste und zweite "Beacon"-Signal Teil einer Mehrzahl von "Beacon"-Signalen sind, die in einer Mehrzahl von Iterationen eines "Beacon-Sweep" dergestalt übertragen werden, dass innerhalb jeder einzelnen der Mehrzahl von Iterationen der WLAN-Sender (111) das "Beacon"-Signal in einer Mehrzahl von unterschiedlichen Übertragungsrichtungen (113, 114) überträgt.

4. Zugangspunktgerät (110) nach Anspruch 3, wobei der "Beacon-Sweep" mindestens einen Abschnitt eines ellipsenförmigen Abdeckungsbereichs um das Zugangspunktgerät (110) abdeckt.

5. Zugangspunktgerät (110) nach Anspruch 3 oder 4, wobei der Sender (111) dafür ausgelegt ist, Lokationsdaten des Zugangspunkts (102a,b,c) in jeder der Mehrzahl von Iterationen in das "Beacon"-Signal zu kodieren.

6. Zugangspunktgerät (110) nach Anspruch 5, wobei die Lokationsdaten des Zugangspunkts (102a,b,c) Folgendes umfassen:
   Koordinaten des Zugangspunktgeräts (102a,b,c).

7. Zugangspunktgerät (110) nach Anspruch 1, wobei die Kennungsinformationen mindestens ein Element einer Gruppe umfassen, welche aus Folgendem besteht:

   einer absoluten Übertragungsrichtung des "Beacon"-Signals;
   einem Abstrahlwinkel des "Beacon"-Signals in Bezug auf einen Bezugspunkt des Zugangspunktgeräts; und
   einer Zeit innerhalb eines "Sweep"-Zyklus, während dem das "Beacon"-Signal übertragen wurde.

8. Zugangspunktgerät (110) nach Anspruch 1, wobei der Sender (111) einen intelligenten Antennenprozess zum Übertragen mit einer Mehrzahl unterschiedlicher Richtungen (113, 114) in jeder einer Mehrzahl von Iterationen während eines "Beacon-Sweep" unterstützt.

9. Verfahren zum Betreiben eines Zugangspunkts, Folgendes umfassend:

   Anweisen eines Senders (111) in einem drahtlosen lokalen Netzwerk (WLAN), welcher eine Mehrzahl von Antennen (112a,b) aufweist, ein erstes "Beacon"-Signal in eine vorher festgelegte erste Richtung (113), unter Verwendung mindestens einer der Antennen (112a,b), zu übertragen, und ein zweites "Beacon"-Signal in eine vorher festgelegte zweite Richtung (114), welche sich von der ersten Richtung (113) hinsichtlich Azimut und/oder Elevation unterscheidet, unter Verwendung mindestens einer der Mehrzahl von Antennen (112a,b) zu übertragen;
   **dadurch gekennzeichnet, dass** sowohl das erste als auch das zweite "Beacon"-Signal Kennungsinformationen umfassen, die die Richtung des jeweiligen "Beacon"-Signals angeben.

10. Client-Gerät (120), vornehmlich für ein drahtloses lokales Netzwerk (WLAN), Folgendes umfassend:

mindestens eine Antenne (122a,b); und

einen Prozessor (121), für Folgendes eingerichtet:

Empfangen von mindestens zwei "Beacon"-Signalen (123, 124) von mindestens zwei Zugangspunktgeräten (125a,b); und

Schätzen von Lokationsinformationen, vornehmlich der geografischen Länge, geografischen Breite und/oder Höhe eines jeden des Client-Geräts (120), basierend auf den mindestens zwei "Beacon"-Signalen (123, 124), vornehmlich basierend auf einem Inhalt der Signale und/oder einem Leistungswert der Signale; **dadurch gekennzeichnet, dass** jedes "Beacon"-Signal Kennungsinformationen umfasst, die die Richtung des jeweiligen "Beacon"-Signals angeben.

**11.** Client-Gerät (120) nach Anspruch 10, wobei der Prozessor (121) dafür ausgelegt ist, eine "Beacon"-Kennung und die Lokationsinformationen von jedem der mindestens zwei "Beacon"-Signale (123, 124) zu dekodieren und die Lokationsinformationen des Client-Geräts entsprechend zu schätzen.

**12.** Client-Gerät (120) nach Anspruch 10, wobei der Prozessor (121) dafür ausgelegt ist, Daten der äquivalenten isotropen Strahlungsleistung ("Equivalent Isotropically Radiated Power" (EIRP)) von den mindestens zwei "Beacon"-Signalen (123, 124) zu dekodieren und die EIRP-Daten zu nutzen, um eine Schätzung der Lokationsinformationen zu verbessern.

**13.** Client-Gerät (120) nach einem der Ansprüche 10-12, wobei der Prozessor (121) dafür ausgelegt ist, Lokationsdaten des Zugangspunkts (125a,b) von den mindestens zwei "Beacon"-Signalen (123, 124) zu dekodieren und die dekodierten Lokationsdaten des Zugangspunkts (125a,b) zum Schätzen der Lokationsinformationen zu nutzen.

**14.** Client-Gerät (120) nach einem der Ansprüche 10-13, wobei der Signalinhalt einen Abstrahlwinkel in Bezug auf einen Bezugspunkt eines ersten der mindestens zwei Zugangspunktgeräte (125a,b) umfasst; wobei der Prozessor für Folgendes ausgelegt ist:

Berechnen einer ersten Empfangssignalstärkeindikation ("Received Signal Strength Indication" (RSSI)) von Übertragungen des ersten der mindestens zwei Zugangspunktgeräte (125a,b);

Berechnen einer zweiten RSSI von Übertragungen des ersten der mindestens zwei Zugangspunktgeräte (125a,b) des "Beacon"-Signals; und

Schätzen der Lokationsinformationen durch Berechnen eines Winkels zum ersten der mindestens zwei Zugangspunktgeräte (125a,b) entsprechend einer Differenz zwischen der ersten RSSI und der zweiten RSSI.

**15.** Client-Gerät (120) nach einem der Ansprüche 10-14, wobei die mindestens eine Antenne (122a,b) dafür ausgelegt ist, eine Mehrzahl kodierter "Beacon"-Signale von einer Mehrzahl von Zugangspunktgeräten (125a,b) zu empfangen; wobei der Prozessor für Folgendes ausgelegt ist:

Berechnen einer Empfangssignalstärkeindikaction (RSSI) von jedem einzelnen der Mehrzahl kodierter "Beacon"-Signale;

Aufbauen einer WLAN-Verbindung mit einem aus der Mehrzahl von Zugangspunktgeräten (125a,b) entsprechend der RSSI eines jeden einzelnen der Mehrzahl kodierter "Beacon"-Signale.

**16.** Verfahren zum Betreiben eines Client-Geräts (120), Folgendes umfassend:

Empfangen von mindestens zwei "Beacon"-Signalen (123, 124) von mindestens einem Zugangspunktgerät (125a,b); und

Schätzen von Lokationsinformationen, vornehmlich der geografischen Länge, geografischen Breite und/oder Höhe des Client-Geräts (120), basierend auf den mindestens zwei "Beacon"-Signalen (123, 124), vornehmlich basierend auf einem Inhalt der Signale und/oder einem Leistungswert der Signale; **dadurch gekennzeichnet, dass** jedes "Beacon"-Signal Kennungsinformationen umfasst, die die Richtung des jeweiligen "Beacon"-Signals angeben.

**Revendications**

**1.** Dispositif de point d'accès (110), en particulier pour un réseau local sans fil (WLAN), comprenant :

une pluralité d'antennes (112a, b) ;
un émetteur (111) configuré pour :

transmettre un premier signal de balise dans une première direction prédéfinie (113), en utilisant au moins une des antennes (112a, b) ; et
transmettre un second signal de balise dans une seconde direction prédéfinie (114), qui est différente de la première direction (113) en azimut et/ou en élévation, en utilisant au moins une des antennes (112a, b) ;
**caractérisé en ce que**
chacun desdits premier et second signaux de balise comprend des informations d'identification indicatives de la direction du signal de balise respectif.

2. Dispositif de point d'accès (110) selon la revendication 1, chacun desdits premier et second signaux de balise étant produit par plus d'une antenne (112a, b) en utilisant la formation de faisceau.

3. Dispositif de point d'accès selon l'une quelconque des revendications précédentes, lesdits premier et second signaux de balise faisant partie d'une pluralité de signaux de balise transmis dans une pluralité d'itérations d'un balayage de balise de telle sorte que dans chacune de la pluralité d'itérations l'émetteur WLAN (111) transmet le signal de balise dans une pluralité de directions de transmission différentes (113, 114).

4. Dispositif de point d'accès (110) selon la revendication 3, le balayage de la balise couvrant au moins une section d'une zone de couverture elliptique autour du dispositif de point d'accès (110).

5. Dispositif de point d'accès (110) selon la revendication 3 ou 4, l'émetteur (111) étant adapté pour coder des données de position de point d'accès (102a, b, c) dans le signal de balise dans chacune de la pluralité des itérations.

6. Dispositif de point d'accès (110) selon la revendication 5, les données de localisation du point d'accès (102a, b, c) comprenant :
les coordonnées du dispositif du point d'accès (102a, b, c).

7. Dispositif de point d'accès (110) selon la revendication 1, les informations d'identification comprenant au moins un membre d'un groupe constitué de :

une direction de transmission absolue du signal de la balise ;
un angle de transmission du signal de la balise relatif à un point de référence du dispositif du point d'accès ; et
un temps à l'intérieur d'un cycle de balayage pendant lequel le signal de la balise a été transmis.

8. Dispositif de point d'accès (110) selon la revendication 1, l'émetteur (111) supportant un procédé d'antenne intelligente pour transmettre dans une pluralité de directions différentes (113, 114) dans chacune d'une pluralité d'itérations pendant un balayage de balise.

9. Procédé de fonctionnement d'un point d'accès, comprenant :

la commande à un émetteur (111) de réseau local sans fil (WLAN) ayant une pluralité d'antennes (112a, b) de transmettre un premier signal de balise dans une première direction prédéfinie (113), en utilisant au moins une des antennes (112a, b) et de transmettre un second signal de balise dans une seconde direction prédéfinie (114), qui est différente de la première direction (113) en azimut et/ou élévation, en utilisant au moins une de la pluralité des antennes (112a, b) ;
**caractérisé en ce que**
chacun desdits premier et second signaux de balise comprend des informations d'identification indicatives de la direction du signal de balise respectif.

10. Dispositif client (120), en particulier pour un réseau local sans fil (WLAN), comprenant :

au moins une antenne (122a, b) ; et
un processeur (121) configuré pour :

recevoir au moins deux signaux de balise (123, 124) provenant d'au moins deux dispositifs de point d'accès (125a, b) ; et

estimer des informations de localisation, en particulier la longitude, la latitude et/ou la hauteur de chacun desdits dispositifs clients (120), sur la base des au moins deux signaux de balise (123, 124), en particulier sur la base du contenu des signaux et/ou d'une valeur de puissance des signaux ;

**caractérisé en ce que**

chaque signal de balise comprend des informations d'identification indicatives de la direction du signal de balise respectif.

11. Dispositif client (120) selon la revendication 10, ledit processeur (121) étant adapté pour décoder un identificateur de balise et lesdites informations de localisation provenant de chacun desdits au moins deux signaux de balise (123, 124) et estimer lesdites informations de localisation dudit dispositif client en conséquence.

12. Dispositif client (120) selon la revendication 10, le processeur (121) étant adapté pour décoder des données de puissance isotrope rayonnée équivalente (EIRP) à partir des au moins deux signaux de balise (123, 124) et utiliser les données EIRP pour améliorer une estimation des informations de localisation.

13. Dispositif client (120) selon l'une quelconque des revendications 10 à 12, le processeur (121) étant adapté pour décoder des données de localisation de point d'accès (125a, b) provenant des au moins deux signaux de balise (123, 124) et pour utiliser les données de localisation de point d'accès décodé (125a, b) pour estimer les informations de localisation.

14. Dispositif client (120) selon l'une quelconque des revendications 10 à 13, le contenu du signal comprenant un angle de transmission relatif à un point de référence d'un premier des au moins deux dispositifs de point d'accès (125a, b) ; le processeur étant adapté pour :

calculer une première indication de l'intensité du signal reçu (RSSI) des transmissions du premier des au moins deux dispositifs de point d'accès (125a, b) ;

calculer un deuxième RSSI des transmissions du premier des au moins deux dispositifs de point d'accès (125a, b) du signal de la balise ; et

estimer l'information d'emplacement en calculant un angle par rapport au premier des au moins deux dispositifs de point d'accès (125a, b) en fonction d'une différence entre le premier RSSI et le second RSSI.

15. Dispositif client (120) selon l'une quelconque des revendications 10 à 14, l'au moins une antenne (122a, b) étant adaptée pour recevoir une pluralité de signaux de balise codés provenant d'une pluralité de dispositifs de points d'accès (125a, b) ; le processeur étant adapté pour :

calculer une indication de l'intensité du signal reçu (RSSI) de chacun des signaux de la pluralité de signaux de balises codés ;

établir une connexion WLAN avec l'un de la pluralité de dispositifs de points d'accès (125a, b) en fonction du RSSI de chacun de la pluralité de signaux de balises codés.

16. Procédé de fonctionnement d'un dispositif client (120), comprenant :

la réception d'au moins deux signaux de balise (123, 124) provenant d'au moins un dispositif de point d'accès (125a, b) ; et

l'estimation d'une information de localisation, en particulier la longitude, la latitude et/ou la hauteur dudit dispositif client (120) sur la base des au moins deux signaux de balise (123, 124), en particulier sur la base d'un contenu des signaux et/ou d'une valeur de puissance des signaux ;

**caractérisé en ce que**

chaque signal de balise comprend des informations d'identification indicatives de la direction du signal de balise respectif.

FIGURE 1A

FIGURE 1B

FIGURE 1C

FIGURE 2

FIGURE 3

FIGURE 4A

FIGURE 4B

INSTRUCT A WLAN TRANSMITTER HAVING A PLURALITY OF ANTENNAS TO TRANSMIT A FIRST BEACON SIGNAL IN A PRE-DEFINED FIRST DIRECTION, USING AT LEAST ONE OF THE ANTENNAS — 502

INSTRUCT THE WLAN TRANSMITTER TO TRANSMIT A SECOND BEACON SIGNAL IN A PRE-DEFINED SECOND DIRECTION, WHICH IS DIFFERENT FROM THE FIRST DIRECTION — 504

## FIGURE 5

RECEIVE AT LEAST TWO BEACON SIGNALS FROM AT LEAST ONE ACCESS POINT DEVICE — 602

ESTIMATE A LOCATION INFORMATION, IN PARTICULAR LONGITUDE, LATITUDE, AND/OR HEIGHT OF SAID CLIENT DEVICE BASED ON THE AT LEAST TWO BEACON SIGNALS — 604

## FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110018766 A1
- US 20050035906 A1
- US 20140274112 A1
- EP 2552162 A2